# NEUE EUROPÄISCHE PATENTSCHRIFT

(11) **EP 2 463 631 B2**
(45) Veröffentlichungstag und Bekanntmachung des Hinweises auf die Entscheidung über den Einspruch: **13.01.2021**
(45) Hinweis auf die Patenterteilung: 14.02.2018
(21) Anmeldenummer: 11009539.5
(22) Anmeldetag: 02.12.2011
(51) Int. Cl.: G01G 19/414, G01G 23/18, G01G 23/38, G07G 1/00, G06K 19/06, G06Q 30/04

(54) **Ladenwaage**
Shop scale
Balance de magasin

(30) Priorität: 07.12.2010 DE 102010053599
(43) Veröffentlichungstag der Anmeldung: 13.06.2012
(73) Patentinhaber: Bizerba SE & Co. KG, 72336 Balingen (DE)
(72) Erfinder: Schick, Frank, 72461 Albstadt (DE)
(74) Vertreter: Huber, Meik

(56) Entgegenhaltungen:
- EP-A1- 2 211 153
- DE-A1-102007 038 810
- US-A1- 2005 055 281
- US-A1- 2008 048 044
- US-A1- 2008 277 168
- KATO H ET AL: "2D Barcodes for Mobile Phones", MOBILE TECHNOLOGY, APPLICATIONS AND SYSTEMS, 2005 2ND INTERNATIONAL CO NFERENCE ON GUANGZHOU, CHINA 15-17 NOV. 2005, PISCATAWAY, NJ, USA,IEEE, PISCATAWAY, NJ, USA, 15. November 2005 (2005-11-15), Seiten 1-8, XP010926841, ISBN: 978-981-05-4573-4

## Beschreibung

Die Erfindung betrifft eine Ladenwaage nach den Merkmalen des Oberbegriffs des Anspruchs 1 sowie ein Verfahren zum Betrieb einer Ladenwaage nach den Merkmalen des Anspruchs 4.

Aus der Praxis sind Ladenwaagen bekannt, die im Frischeverkauf des Einzelhandels eingesetzt werden und dem Kunden zusätzlich zu Gewicht und Preis noch warenspezifische Informationen anzeigen, wie z. B. Inhaltsstoffe oder Nährstoffe.

Bei vielen Kunden besteht der Wunsch, diese Informationen mitnehmen zu können. So werden diese Zusatzinformationen auf einem Bon ausgedruckt und den Kunden ausgehändigt. Der Bon ist jedoch kein optimales Medium, um solche Informationen bequem zu archivieren. Insbesondere wenn die Informationen umfangreicher werden kann es schwierig sein, diese auf einem Bon übersichtlich darzustellen.

Der Erfindung liegt die Aufgabe zugrunde eine Vorrichtung und ein Verfahren zu schaffen, die es bei einem Verkaufsvorgang ermöglichen, einem Bediener oder einem Kunden zusätzliche Informationen auf einfache Art und Weise zu übergeben.

Diese Aufgabe wird erfindungsgemäß durch eine Ladenwaage mit den Merkmalen des Anspruchs 1 oder ein Verfahren mit den Merkmalen des Anspruchs 4 gelöst.

Die Ladenwaage weist ein Display, vorzugsweise ein Bediendisplay oder Kundendisplay oder ein Verkaufsterminal mit einem Display auf, wobei auf dem Display von einem Steuergerät warenspezifische Informationen in Klartext oder als Bildinformationen angezeigt werden. Das Steuergerät wandelt diese warenspezifischen Informationen auch in einen 2D-Code um, und zeigt diesen 2D-Code auf dem Display an. Ein Bediener oder Kunde kann dann über ein mobiles Lesegerät den 2D-Code abfotografieren und mitnehmen. Dadurch erhält ein Benutzer die warenspezifische Information in einer kompakten und mobilen Form.

Das mobile Lesegerät kann eine Digitalkamera, ein Mobiltelefon mit Kamera, oder ein mobiler Handheld-Computer, beispielsweise ein PDA oder Tablet-PC sein. Die Bildinformation des 2D-Codes kann dann decodiert werden, d.h. in die Klartextinformation oder Bildinformation zurückverwandelt werden. Dazu kann das mobile Lesegerät die Bildinformation an einen Computer übertragen, der dann die Decodierung anhand einer entsprechenden Software vornimmt, oder das mobile Lesegerät kann die Decodierung selbst vornehmen.

Als 2D-Code kann ein bekannter Strichcode, beispielsweise Codablock oder Code 49 oder ein Matrix-Code eingesetzt werden, wie z. B. QR-Code oder Datamatrix oder MaxiCode oder Aztec-Code. Solche 2D-Codes sind dem Fachmann bekannt, sie werden teilweise in der Logistik oder beim Bezahlen von Porto oder Fahrkarten eingesetzt.

Es ist vorgesehen, dass die warenspezifischen Informationen in einer Datenbank gespeichert sind und anhand einer Warenidentifikationsnummer, beispielsweise einer PLU, eindeutig selektiert und ausgelesen werden. Die Datenbank kann in der Ladenwaage beinhaltet oder über ein Datennetz mit der Ladenwaage oder dem Steuergerät der Ladenwaage verbunden sein. Insbesondere kann die Datenbank teil eines Warenwirtschaftssoftware sein, welche mit der Ladenwaage verbunden oder auf der Ladenwaage installiert ist.

Die warenspezifische Information kann beispielsweise Inhaltsstoffe oder Nährwerte der Ware umfassen, aber auch Informationen zu Herkunft oder Verwendung der Ware beinhalten. Es können beispielsweise auch Kochrezepte oder Verwendungshinweise in den warenspezifischen Informationen enthalten sein.

Für eine gute Lesbarkeit ist es vorgesehen, dass die warenspezifischen Informationen auf einem Display sowohl in Klartext und in 2D-Code dargestellt werden. Dabei erfolgt die Darstellung der Informationen auf einem Display räumlich nebeneinander bzw. übereinander. Insbesondere ist vorgesehen, dass die Ladenwaage oder ein Verkaufsterminal ein Kundendisplay, d. h. ein zum Kunden gerichtetes Display aufweist, um die warenspezifischen Informationen anzuzeigen.

Um auch große Informationsmengen darstellen, bzw. auf ein mobiles Lesegerät übertragen zu können ist vorgesehen, dass diese in mehrere kleinere Datenblöcke unterteilt werden, wobei auf dem Display jeder Datenblock nacheinander angezeigt wird. Jeder Datenblock erhält zudem eine eindeutige Identifikationsnummer, so dass das mobile Lesegerät die einzelnen Datenblöcke wieder zu einer kompletten Datei zusammensetzen kann. Vorzugsweise nimmt das mobile Lesegerät zum Erfassen der mehreren Datenblöcke eine kurzes Video auf, in dem alle Datenblöcke enthalten sind und aus dem dann die Gesamtinformation rekonstruiert wird.

Erfindungsgemäß ist vorgesehen, dass personenbezogene Daten in einer Personendatenbank hinterlegt werden können. Dazu wird jeweils pro Kunde ein personenspezifisches Kundenkonto eröffnet und die warenspezifischen Informationen, die ein Kunde abruft, werden zu dem Kundenkonto gespeichert. Ein Kunde kann sich dann mit seiner Kundenidentifikation anmelden und bekommt Zugriff auf sein Kundenkonto. Das hat den Vorteil, dass jeder Kunde die ihn interessierenden Daten aus seinem Kundenkonto bzw. Personendatenbank jederzeit, insbesondere auch mehrmals abrufen kann.

Zudem kann in einer Ausführung vorgesehen sein, dass die warenspezifischen Informationen bei der Übertragung mit einem kundenspezifischen Schlüssel verschlüsselt werden, um eine sichere Datenübertragung zu gewährleisten. Ein Kunde kann den Schlüssel vorzugsweise in seinem Kundenkonto frei wählen.

Eine Anwendung der Erfindung ist insbesondere im Einzelhandel vorgesehen, um den Kunden zusätzlich zu der verkauften Ware einen Zusatznutzen zu vermitteln.

Weitere Ausführungsbeispiele der Erfindung sind in den Figuren dargestellt und der dazugehörenden Beschreibung beschrieben.

Es zeigen,
- Figur 1:: eine beispielhafte Ansicht einer erfindungsgemäßen Ladenwaage;
- Figur 2:: eine schematische Blockdarstellung des Aufbaus der Ladenwaage.

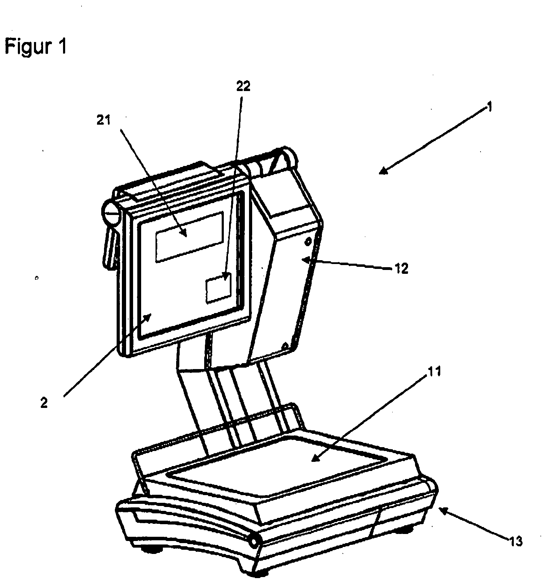

Die Figur 1 zeigt eine Ladenwaage 1 mit einem Gehäuse 13. Das Gehäuse 13 umfasst eine Last- bzw. Wiegeplatte 11, auf der Wiegegut aufgelegt werden kann. Die Lastplatte ist mit einer innerhalb der Ladenwaage 1 angeordneten, der Übersichtlichkeit halber nicht dargestellten Wägezelle zum Ermitteln des Gewichts des Wiegeguts verbunden. Das Gehäuse 13 ist an seiner Unterseite über Füße auf einer ebenen Fläche, z. B. einer Verkaufstheke, abstellbar. Die Füße sind in der Höhe verstellbar, um zu gewährleisten, dass die Ladenwaage 1 auch bei unebenem Untergrund immer genau horizontal ausgerichtet ist. In dem Gehäuse 13 ist ein nicht dargestellter Gewichtsensor zum Erfassen des Gewichts eines auf die Lastplatte 11 aufgelegten Gegenstandes, also des Wiegeguts, angeordnet.

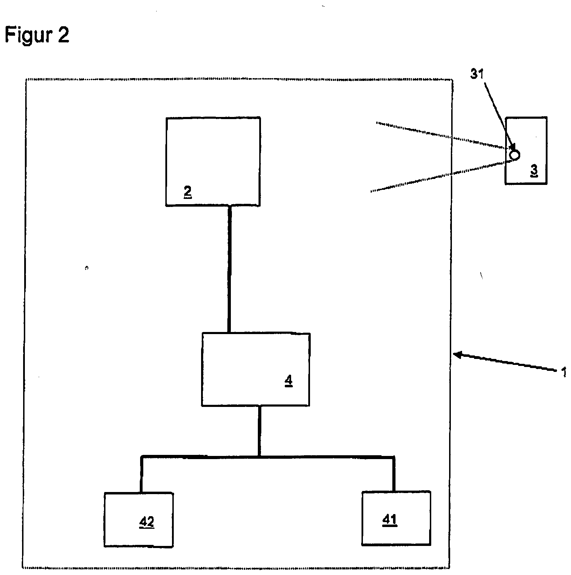

Das Gehäuse 13 weist zudem einen Drucker 13 zum Drucken von Etiketten und ein Display 2 auf. Das Display 2 ist als berührungsempfindlicher Bildschirm oder als Touch-Screen ausgebildet und dient sowohl zur Anzeige als auch zur Eingabe von Daten. Eine in Figur 2 schematisch dargestellte Steuerungsvorrichtung 4 übernimmt die Ansteuerung des Displays 2. Das Display weist zwei Anzeigebereiche auf, wobei in dem ersten Anzeigebereich 21 Wareninformation im Klartext angezeigt wird und in dem zweiten Anzeigebereich 22 wird die Wareninformation als 2D-Code dargestellt.

Über ein mobiles Gerät, beispielsweise ein Mobiltelefon 3 mit einer Kamera 31 kann der auf dem Display 2 dargestellte 2D-Code abfotografiert und in die ursprüngliche Wareninformation zurückgewandelt werden. So kann der Kunde zu einem Artikel beispielsweise mit seinem Mobiltelefon die zugehörigen Inhaltsstoffe oder Kochrezepte erhalten.

Die warenspezifische Information ist in einer Datenbank 41 gespeichert, die über Datenleitungen mit dem Steuergerät 4 verbunden ist. Über eine eindeutige Warenkennzeichnungsnummer, eine PLU, kann das Steuergerät 4 in der Datenbank die zu der PLU hinterlegte Information selektieren und auf dem Display 2 anzeigen.

Eine personenbezogene Datenbank 42 ist vorgesehen, um kundenspezifische Informationen hinterlegen zu können. In der personenbezogenen Datenbank 42 werden dazu verschiedene personalisierte Kundenkonten angelegt. Auch diese personenbezogene Datenbank 42 ist über Datenleitungen mit dem Steuergerät verbunden und dient dazu, entweder die von einem Kunden abgerufenen warenspezifischen Informationen selbst abzuspeichern oder eine Historie der abgerufenen warenspezifischen Informationen abzuspeichern.

Dabei ist vorgesehen, dass sich ein Bediener oder Kunde mit seiner personenspezifischen Kennung an dem Steuergerät 4 anmeldet, indem er seine personenspezifischen Kennung über den Touch-Screen des Displays 2 eintippt. Daraufhin erhält er Zugang zu seinem Kundenkonto und kann seine bisher gespeicherten und/oder abgerufenen Informationen einsehen oder neue Wareninformationen passend zu seinen Einkäufen abspeichern.

## Patentansprüche

1. Ladenwaage mit einer Wägezelle, die mit einer Lastplatte (11) zum Ermitteln des Gewichts von Wägegut verbunden ist und einer Bedien- und Anzeigevorrichtung mit einem Display (2) zum Anzeigen von Preis und/oder Gewicht des Wägeguts und einem Steuergerät (4) mit einer Datenbank (41) in der warenspezifische Informationen gespeichert sind, wobei das Steuergerät (4) anhand einer Warenidentifikationsnummer aus der Datenbank (41) eine warenspezifische Information selektiert und auf dem Display (2) anzeigt, **dadurch gekennzeichnet,**
**dass** das Steuergerät (4) die warenspezifische Information auf dem Display (2) als Klartext und/oder Bildinformation anzeigt, diese warenspezifische Information in einen 2D-Code wandelt und diese warenspezifische Information auf dem Display (2) sowohl als Klartext und/oder Bildinformation wie auch als 2D-Code nebeneinander und/oder übereinander anzeigt und dass sich eine Person an dem Steuergerät (4) identifiziert und das Steuergerät (4) die in den 2D-Code gewandelte warenspezifische Information in einer Personendatenbank (42) mit der Person verknüpft oder unter der Datenbankkennung dieser Person abspeichert.

2. Ladenwaage nach Anspruch 1,
**dadurch gekennzeichnet,**
**dass** das Steuergerät (4) die warenspezifische Information in mehrere 2D-Codeblöcke aufteilt und jeden einzelnen 2D-Codeblock mit einer Nummerierung versieht, die eine Rekonstruktion der warenspezifischen Information ermöglicht.

3. Ladenwaage nach einem der vorhergehenden Ansprüche,
**dadurch gekennzeichnet,**
**dass** sich eine Person an dem Steuergerät (4) identifiziert und das Steuergerät mit einer Personendatenbank (42) verbunden ist und den 2D-Code mit einem in der Personendatenbank (42) hinterlegten personenspezifischen Schlüssel verschlüsselt.

4. Verfahren zum Betrieb eines Verkaufsterminals, insbesondere einer Ladenwaage, wobei auf einem Display des Verkaufsterminals warenspezifische Informationen in Klartext oder Bildern angezeigt und über ein Bedienmenu ausgewählt werden,
**dadurch gekennzeichnet,**
**dass** die ausgewählten warenspezifischen Informationen in einen 2D-Code übersetzt und dann auf dem Display sowohl die warenspezifischen Informationen als auch der 2D-Code nebeneinander und/oder übereinander angezeigt werden und der 2D-Code von einem mobilen Lesegerät abgelesen wird, und dass sich eine Person an dem Verkaufsterminal identifiziert, und dass die ausgewählten, in einen 2D-Code übersetzten, warenspezifischen Informationen in einem Personenkonto einer Personendatenbank (42) zu der Person durch ein Steuergerät (4) des Verkaufsterminals abgespeichert werden.

5. Verfahren nach Anspruch 4,
**dadurch gekennzeichnet,**
**dass** aus der warenspezifischen Information mehrere 2D-Codeblöcke erzeugt werden, wobei jeder 2D-Codeblock mit einer Nummerierung versehen wird, die es einem mobilen Lesegerät ermöglicht die warenspezifische Information aus der Summe der einzelnen 2D-Codeblöcke zu rekonstruieren.

6. Verfahren nach Anspruch 5,
**dadurch gekennzeichnet,**
**dass** die einzelnen 2D-Codeblöcke gleichzeitig nebeneinander oder einzeln nacheinander auf dem Display angezeigt werden.

7. Verfahren nach einem der Ansprüche 4 bis 6,
**dadurch gekennzeichnet,**
**dass** sich eine Person an dem Verkaufsterminal identifiziert und der 2D-Code mit einem personenspezifischen Schlüssel verschlüsselt wird.

## Claims

1. Shop scales having a load cell, which is connected to a load plate (11) for determining the weight of goods to be weighed, and an operating and display apparatus having a display (2) for displaying the price and/or weight of the goods to be weighed, and a control device (4) having a database (41) which stores goods-specific information, the control device (4) selecting an item of goods-specific information from the database (41) on the basis of a goods identification number and displaying said information on the display (2),
**characterized**
**in that** the control device (4) displays the goods-specific information on the display (2) as plain text and/or image information, converts this goods-specific information into a 2-D code and displays this goods-specific information on the display (2) both as plain text and/or image information and as a 2-D code beside one another and/or above one another, and
**in that** a person is identified at the control device (4) and the control device (4) links the goods-specific information converted into the 2-D code to the person in a personal database (42) or stores said information under the database identifier of this person.

2. Shop scales according to Claim 1,
**characterized**
**in that** the control device (4) divides the goods-specific information into a plurality of 2-D code blocks and provides each individual 2-D code block with numbering which makes it possible to reconstruct the goods-specific information.

3. Shop scales according to one of the preceding claims,
**characterized**
**in that** a person is identified at the control device (4) and the control device is connected to a personal database (42) and encrypts the 2-D code with a person-specific key stored in the personal database (42).

4. Method for operating a sales terminal, in particular shop scales, goods-specific information being displayed on a display of the sales terminal in plain text or images and being selected by means of an operating menu,
**characterized**
**in that** the selected goods-specific information is translated into a 2-D code and both the goods-specific information and the 2-D code are then displayed on the display beside one another and/or above one another and the 2-D code is read by a mobile reader, and in that a person is identified at the sales terminal, and in that the selected goods-specific information translated into a 2-D code is stored in a personal account of a personal database (42) for the person by a control device (4) of the sales terminal.

5. Method according to Claim 4,
**characterized**
**in that** a plurality of 2-D code blocks are generated from the goods-specific information, each 2-D code block being provided with numbering which makes it possible for a mobile reader to reconstruct the goods-specific information from the sum of the individual 2-D code blocks.

6. Method according to Claim 5,
**characterized**
**in that** the individual 2-D code blocks are displayed beside one another at the same time or individually in succession on the display.

7. Method according to one of Claims 4 to 6, **characterized**
**in that** a person is identified at the sales terminal and the 2-D code is encrypted with a person-specific key.

## Revendications

1. Balance de magasin avec une cellule de pesée, laquelle est reliée à un plateau de charge (11) pour déterminer le poids d'une marchandise à peser, et un dispositif de commande et d'affichage avec un écran (2) pour l'affichage du prix et/ou du poids de la marchandise à peser, et un appareil de commande (4) avec une base de données (41) dans laquelle des informations spécifiques à un produit sont enregistrées, dans laquelle l'appareil de commande (4) sélectionne à l'aide d'un numéro d'identification de produit depuis la base de données (41) une information spécifique à un produit et l'affiche sur l'écran (2),
**caractérisée en ce**
**que** l'appareil de commande (4) affiche l'information spécifique à un produit sur l'écran (2) en texte clair et/ou sous forme d'information en image, convertit cette information spécifique à un produit en un code 2D et affiche cette information spécifique à un produit sur l'écran (2) à la fois en texte clair et/ou sous forme d'information en image ainsi que sous forme de code 2D de manière juxtaposée et/ou superposée, et
en ce qu'une personne s'identifie au niveau de l'appareil de commande (4) et l'appareil de commande (4) établit un lien entre l'information spécifique à un produit convertie en code 2D dans une base de données de personnes (42) et la personne, ou l'enregistre sous l'identifiant de base de données de cette personne.

2. Balance de magasin selon la revendication 1,
**caractérisée en ce**
**que** l'appareil de commande (4) partage l'information spécifique à un produit en plusieurs blocs de code 2D et dote chaque bloc de code 2D individuel d'une numérotation qui permet une reconstitution de l'information spécifique à un produit.

3. Balance de magasin selon l'une des revendications précédentes,
**caractérisée en ce**
**qu'**une personne s'identifie au niveau de l'appareil de commande (4) et l'appareil de commande est relié à une base de données de personnes (42) et code le code 2D avec une clé spécifique à une personne déposée dans la base de données de personnes (42).

4. Procédé pour l'exploitation d'un terminal de point de vente, en particulier d'une balance de magasin, dans lequel on affiche sur un écran du terminal de point de vente des informations spécifiques à un produit en texte clair ou en images et on les sélectionne via un menu de commande,
**caractérisé en ce**
**que** les informations spécifiques à un produit sélectionnées sont traduites en un code 2D et que l'on affiche ensuite sur l'écran les informations spécifiques à un produit ainsi que le code 2D de manière juxtaposée et/ou superposée et le code 2D est lu par un appareil de lecture mobile, et en ce qu'une personne s'identifie au niveau du terminal du point de vente, et en ce que les informations spécifiques à un produit sélectionnées, traduites en un code 2D, sont enregistrées dans un compte personnel dans une base de données de personnes (42) relative à la personne, par un appareil de commande (4) du terminal de point de vente.

5. Procédé selon la revendication 4,
**caractérisé en ce**
**que** l'on génère à partir de l'information spécifique à un produit plusieurs blocs de code 2D, dans lequel chaque bloc de code 2D est doté d'une numérotation qui permet à un appareil de lecture mobile de reconstituer l'information spécifique à un produit à partir de la somme des blocs de code 2D individuels.

6. Procédé selon la revendication 5,
**caractérisé en ce**
**que** les blocs de code 2D individuels sont affichés simultanément de manière juxtaposée ou individuellement de manière successive sur l'écran.

7. Procédé selon l'une des revendications 4 à 6,
**caractérisé en ce**
**qu'**une personne s'identifie au niveau du terminal de point de vente et que le code 2D est codé avec une clé spécifique à une personne.
